# EUROPEAN PATENT SPECIFICATION

(11) **EP 3 781 343 B1**
(45) Date of publication and mention of the grant of the patent: **14.06.2023**
(21) Application number: 19720462.1
(22) Date of filing: 15.04.2019
(51) Int. Cl.: B23D 59/00, B23Q 17/22, G05B 19/4069

(54) **METHOD OF INDICATING CUTS TO BE CARRIED OUT AND CUTTING MACHINES**
VERFAHREN ZUR ANZEIGE DER DURCHZUFÜHRENDEN SCHNITTE UND SCHNEIDEMASCHINEN
PROCÉDÉ POUR INDIQUER DES COUPES À EFFECTUER ET MACHINES DE COUPE

(30) Priority: 20.04.2018 DK PA201870239
(43) Date of publication of application: 24.02.2021
(73) Proprietor: Struers ApS, 2750 Ballerup (DK)
(72) Inventor: DANØ, Sune Demuth, 2870 Ballerup (DK); VADGAARD, Torben, 2750 Ballerup (DK); NØRBYGAARD, Thomas, 2750 Ballerup (DK); HLUCHNIK, Marek, 702 00 Ostrava (CZ); SEDLACEK, Jiri, 702 00 Ostrava (CZ)
(74) Representative: Zacco Denmark A/S
(86) International application number: PCT/EP2019/059676
(87) International publication number: WO 2019/201856

(56) References cited:
- EP-A1- 3 424 304
- EP-A2- 1 258 305
- DE-A1- 3 439 373
- DE-U1-202017 104 256
- US-A- 4 424 649
- US-A1- 2013 090 755

## Description

### Summary

The invention relates to a method of indicating cuts to be carried out on a workpiece mounted in a processing machine such as cutting machines having means for indicating processing steps on a workpiece or on a display.

### Background

One example of a cutting machine is disclosed in US4424649 where the machine comprises a rotating parting wheel for carrying out parting cuts in a workpiece and to a workpiece positioning device for a parting machine of this type. The parting machine comprises a parting wheel and a drive motor for driving said parting wheel and a clamping device for clamping the workpiece.

One of the disadvantage of the above solution, is that there is a risk of damaging the cutting wheel during the cutting sequence(s). Another disadvantage is the risk of damaging the workpiece, the machine, the equipment tools, the abrasive consumables and the clamping accessories if the programming is not done correctly.

A method according to the preamble of claim 1 and a machine according to the preamble of claim 4 are known from EP1258305A2.

US 2013/090755 A1 is relevant to the subject-matter of claim 5, as it shows the simulation of machining operations before effectively carrying them out to avoid jamming of the tool with the workpiece or damage of the machine by the tool.

DE202017104256U discloses a CNC-machine with a laser that displays line markings on a workpiece. A user will shift the position of the lines such that a point of intersection of the lines matches a point on the workpiece where a surface processing on the workpiece is to be carried out; the position of this point is then stored in a computer, following which surface processing is initiated.

The general object of the present invention is to provide a cutting machine for reducing the risk of damaging the cutting tool or the workpiece by cutting in the wrong place or cutting too aggressively.

The above need and object will be evident from below detailed description.

According to the invention, a method defined by the features of claim 1 and cutting machines defined by the features of claims 4 and 5 are provided.

According to a first aspect of the present invention obtained by a method comprising a step of visualizing of a succession of individual planned processing steps to be sequentially applied to the workpiece, prior to execution of the processing steps. By indicating a processing step e.g. by the use of a light emitting device such as a laser beam emitter, it is possible to reduce the manual intervention, as the number of times the operator has to intervene is significantly reduced due to the circumstance that the operator does not need to be involved each time a cut has to be made.

Indicating and/or simulating the processing step is an important aid for the operator, as it allows the operator to run simulations of the intended processing step(s). Programming the processing machine can be optimized by enabling the operator to verify the programmed processing sequence(s) prior to running the sequence, which is also beneficial due to the time saving during the programming of the machine. Another advantage of the present invention is that it is possible to achieve an accurately positioning of the workpiece.

A further advantage of the present invention is, that it is also suitable for cutting sequence involving more complex cutting sequences such as cutting steps in different directions.

It is not within the scope of the present invention, that the method of indicating a processing step e.g. indicating cuts can be realized by sound and/or by vibration on an external unit such as a mobile device or a smartphone.

Another optional feature not according to the invention is indication of the smoothness/aggressiveness of cut by different sounds and/or vibrations, for example a louder and rougher sound for a fast cut and a more gentle sound for a slower cut. This feature is especially useful as damage to a workpiece either arises from cutting in the wrong place or from cutting to aggressively, and this features provides the operator of the processing machine with valuable operational information.

The processing machine is able to indicate a processing step in a machine used in the machine industry, e.g. CNC machines (Computerized Numerically Controlled), grinding machines or milling machines. The programming can either be carried out on the machine itself or it can be done by importing the processing step from a supporting device, which is connectable with the machine itself.

By indicating the processing steps, e.g. all planned cuts simultaneously, on the workpiece by light emitting device or on a digital image of the workpiece, it becomes possible to align the workpiece in a preprogrammed cutting sequence, or allow the operator to have an instant check so that the operator can determine if the programmed cutting sequence is the right one.

In addition to indicating the processing steps, It is also possible to indicate alignment marks to aid the positioning of the workpiece. By using alignment markings, it is possible for the operator of the processing machine to ensure, that the workpiece has been positioned at the intended position in the processing machine. The alignment marks can be used to indicate the geometry of the workpiece, hereby assisting the operator during the step of placing and aligning the workpiece in the machine prior to the step of indicating the processing steps to be carried out on the workpiece.

Another option could be that only the alignment marking are indicated as the processing steps to be carried out on the workpiece is displayed visually on a display connected to the processing machine.

Calculating the position of the processing steps e.g. planned cuts on the workpiece is done at the same time as the operator is programming he movement of the table etc.

When reusing stored, preprogrammed cutting sequences, it is important to make sure that the workpiece is positioned correctly and that it is the correct program that has been loaded, in this situation indicating all cuts at the same time on the workpiece would be very useful.

The processing machine includes a controller configured for calculating said individual planned processing steps, wherein the calculating includes movement of the table and the processing unit. When used e.g. in a cutting machine, it is possible to indicate all programmed cuts at the same time. In order to provide such a simulation the operator must indicate the resulting cuts on the workpiece, hereby taken into account the planned movement of the table and the cutting wheel.

In this context the term "workpiece" should be understood a machining element on which a machining process can be performed . The workpiece can be made from any solid material, for instance a crank shaft for a vehicle and the workpiece such as a test specimen is to be mounted in the machine.

In this context the term "processing step" should be understood as a sequence of processing steps to be performed on a workpiece such as a test specimen, where the processes would be selected from the following; cutting or grinding and where the process can involve one or several sequences.

In this context the term "processing machine" should be understood as a machine able to perform processing steps used in the machine industry.

In this context the term "cutting machine" or "cutter machine" should be understood as a machine used for performing cutting e.g. a cut-off on a workpiece such as a test specimen mounted in the machine. The term "cutting machine" is in the context of this application used synonymously with the term "cutter machine"

In this context the term "parting wheel" is also known as a cut-off wheel, cutting wheel, cutting blade or cutting disc used to perform cuts into a workpiece. Parting wheel would also include metal-bonded wheels.. Parting wheel are commonly used in the machining industry, where they are used for cutting reinforcement bars (rebar), protruding bolts or anything that needs quick removal or trimming.

### Detailed description

The invention will now be explained in further detail by embodiments in the form of schematic drawings.
FIG. 1 shows a perspective view of the cutting machine according to a first preferred embodiment.
FIG. 2A shows a perspective view of the cutting machine including a schematic illustration of a workpiece according to a first preferred embodiment without the shutter.
FIG. 2B shows a perspective view of the cutting machine with clamping tool, a cutting disc and a crankshaft (workpiece) according to a first preferred embodiment.
FIG. 3 shows sequentially planned processing steps visualized on the surface of the workpiece according to first embodiment of the light emitting device.
FIG. 4 shows all planned processing steps visualized on the surface of the workpiece according to first embodiment of the light emitting device.
FIG. 5 shows the clamping tool used in the processing machine.

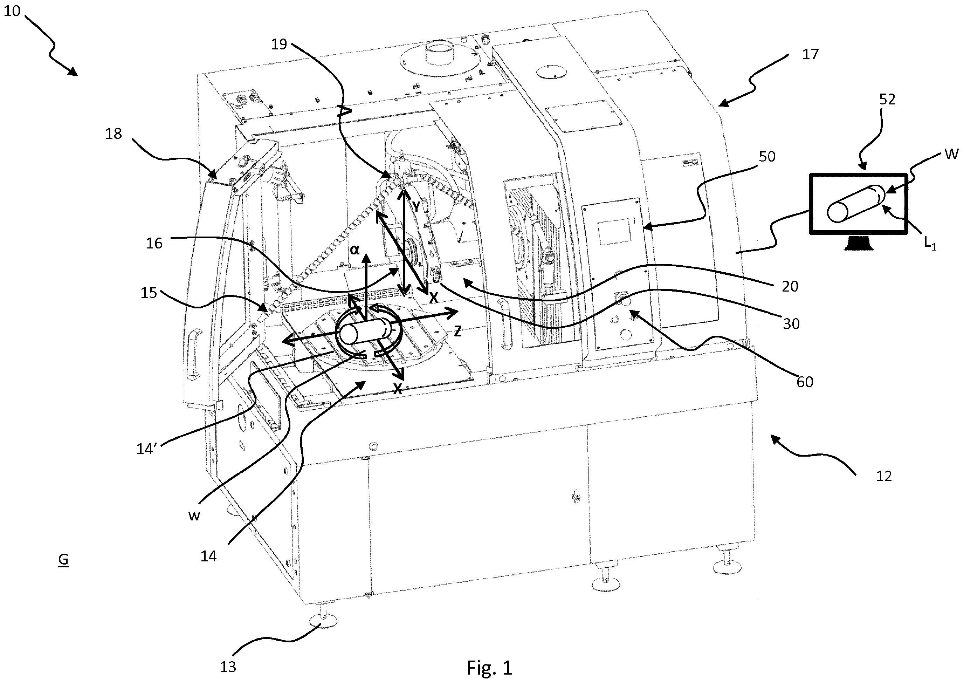

One preferred embodiment of the present invention will be explained with the reference to FIGS 1 through 4. In all the drawings, the workpiece W is shown schematically.

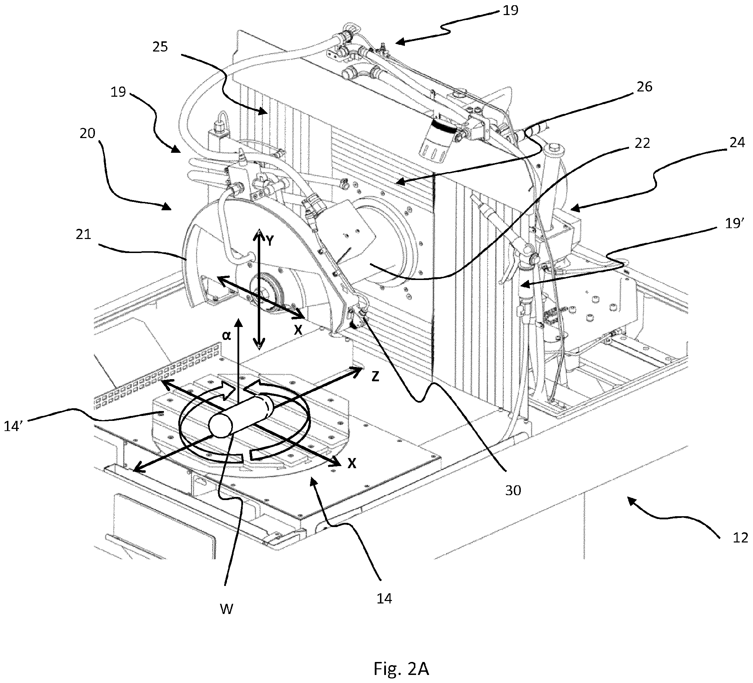

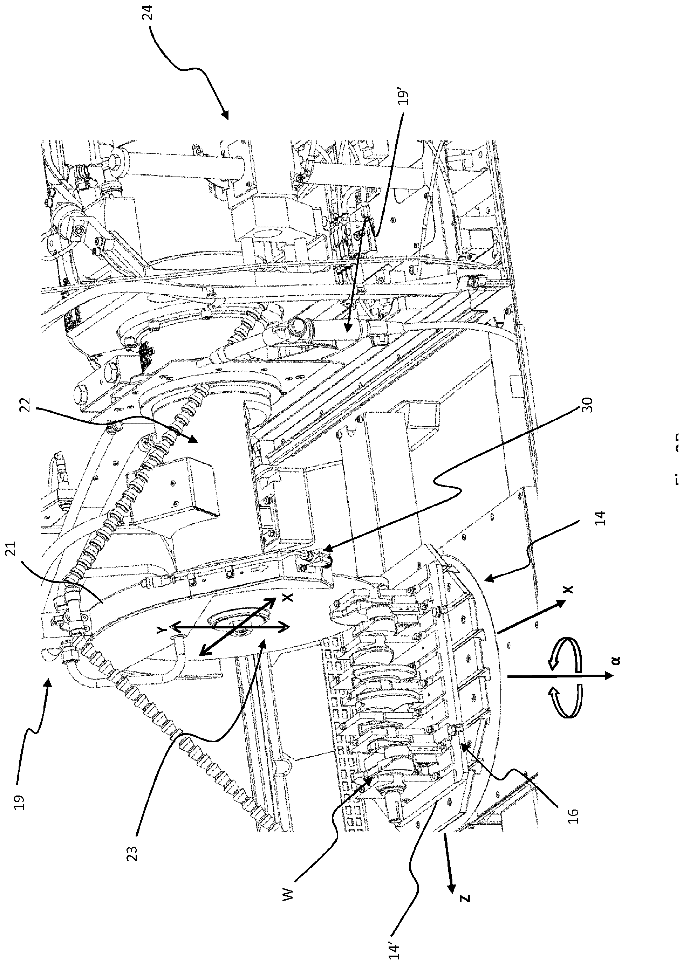

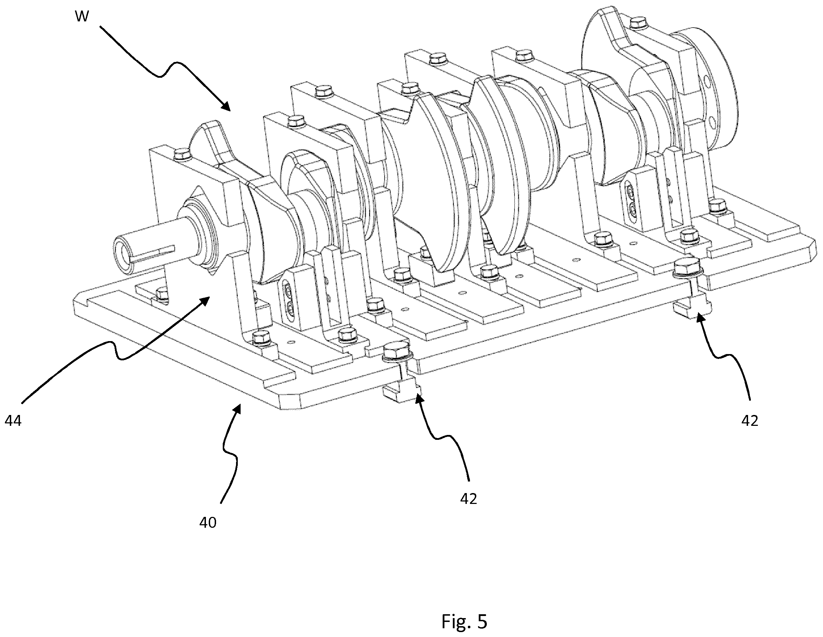

FIG. 1. shows a cutting machine 10 comprising a supporting base 12 and a table 14 being movable in the direction of axis Z as well as rotatable(turnable) around the α-axis (see also FIG. 2). The table 14, also referred to as a moving table, is provided with grooves for affixing a clamping tool (shown in FIG.5) relative to the moving table 14. The grooves are formed as T-slots on the upper surface of the moving table 14. The clamping tool is used for holding the workpieces during the processing sequence.

The supporting base 12 comprises a number of the electrical components and mechanical units, which are enclosed underneath the moving table 14 through the use of a number of removable and/or pivotable hatches. The supporting base is supported by a number of legs 13 allowing the supporting base and hereby the cutting machine to be adjusted and levelled relative to the ground level G.

The table 14 is configured to be rotatable around the α-axis and movable in the horizontal (Z-axis) relative to the supporting base 12 and the cutting unit 20 comprises connecting means for allowing an operator to mount a cut-off wheel onto the base of the cutting unit 20. Displacement of the cutting unit 20 is performed in two directions (X-axis and Y-axis) relative to the moving table 14. In all the FIGS, the cutting machine 10 is depicted without a parting wheel, however it is evident that the parting wheel has to be mounted on the base of the cutting unit 20 in order to perform the cutting. The parting wheel is mounted to the base of the cutting machine by releasing the fastening nut, which is connected to a threaded shaft of the base of said cutting unit 20 in a releasable manner.

As can be seen in FIG 1, the cutting machine 10 comprises a first front door 17 and a second front door 18. The first front door 17 is slideable in the longitudinal direction (Z-axis) of the cutting machine 10, whereas the second front door 18 is a hinged door with a safety lock for enabling access for an operator to the machine moving table 14 with longitudinal and cross T-slots and the cutting unit 20. By having two front doors, the operator can gain access to the interior work space either by pulling one of the doors or by opening both doors.

The cutting machine furthermore includes a cooling system 19 having means for recirculating cooling medium and automatic central lubrication systems are integrated into the supporting base of the cutting machine. A number of flexible knee joint nozzles 15 are used for providing additional coolant to the parting wheel during the operation of the machine.

The cutting machine 10 is used for executing a processing sequence (cutting) in regards to e.g. a metallographic process. The cutting machine comprises a cutting unit 20 connected to a drive unit and a moving table 14 on which a clamping tool can be affixed in the recess (T-slots). The moving table 14 will preferably be guided on guiding elements, which are connected to the supporting base of the cutting machine.

However it is also possible to accommodate the movable and rotatable table in another way e.g. by using a single guide rod onto which the table can be connected, in this way it is possible to allow linear displacement of the table relative to the cutting unit. Relative displacement of the table 14 is possible along the Z-axis, which corresponds to the longitudinal length of the cutting machine.

In one preferred embodiment of the table 14 (workbench), said table is movable along a first axis (Z-axis) and can rotate around axis α as shown in FIG. 2. The table 14 has T-slots penetrating the upper surface 14' of the table making it possible for achieving displacement of the workpiece in a direction being orthogonal to the first axis. The workpiece can be restrained by the clamping tool mounted on the table 14 in relation to the second axis (X-axis), as the T-slots are positioned orthogonal to the first axis (Z-axis).

The cutting unit 20 comprises a parting wheel used for carrying out the parting cuts in relation to the workpiece, a drive unit for rotating the parting wheel and a pivot mechanism. The pivot mechanism 24 is used for pivoting the parting wheel between a cutting position and a non-cutting position and the pivot mechanism 24 is connected to the supporting base of the cutting machine. The cutting unit 20 is movable in two direction as indicated in FIGS 1-2 along the X-axis and the Y-axis.

A controller (not shown in FIGS) is connected to the drive unit 22 and the pivot mechanism 24 (shown in FIG 1) of the cutting unit 20 as well as a second drive unit (not shown) used for moving the table 14 in the longitudinal (Z-axis). An actuator is connected to the pivot mechanism for allowing the cutting unit to be displaced between a first position (non-cutting) and a second position (cutting position). The displacement of the cutting unit can be controlled by the controller.

The cutting machine 10 includes a display 50 on which information in regards to the operational process can be displayed hereby providing the operation with valuable information both prior to and during the cutting sequence.

A joystick 60 can be arranged on the machine, preferable on the second front as shown in FIG. 1. The joystick can be operated by the operator of the cutting machine allowing the operator to move the table along the first axis Z-direction and the second axis X-direction as well as rotating the table around the α-axis . The parting wheel is controlled along the X-direction and Y-direction, by the program in the controller. The joystick allows the operator to manually control the displacement of the moving table 14 and the cutting unit 22. A second display 52 for displaying the image of the workpiece is connected to the cutting machine 10.

FIG. 2B shows a clamping tool 40 configured for clamping a workpiece such as a crank shaft and the cutting disk 23 for performing cuts in the workpiece. The clamping tool 40 will be mounted on a moving table of said cutting machine and the drive motor for driving the cutting unit 20 will be arranged for rotating the cutting disk.

FIG. 5 shows a clamping tool used for positing workpiece and the clamping tool 40 is provided with a number of protruding elements 42 connected to a base of the clamping device for enabling the clamping tool to engage the T-slots in the moving table 14. The clamping tool includes a number of clamping element for fixation of the workpiece W. A quick release mechanism allows the clamping tool to be released from the moving table 14.

The cutting sequence can either be a program stored on the machine or be an operational program, where the operator has to enter a number of operational parameter before the actual cutting is to be performed by the machine, e.g. by using a touch sensitive display on the front of the machine.

The cutting machine 10 includes a controller and a memory configured for receiving user input in the form of a processing sequence e.g. cutting sequence to be entered by the operator either manually or using e.g. supporting device connectable to the processing machine 10. The cuts (processing sequence) would be visualized on the workpiece prior to execution of the cuts but could also be visualized during the execution of the processing sequence. The controller would be able to receive input such as: the cutting speed, data in relation to the cutting disc etc. The controller preferably is configured for visualizing a succession of individual planned processing step to be sequentially applied to the workpiece, prior to execution of the processing steps.

Referring now to FIG. 2A-2B, the cutting machine (cut-off machine) for performing a cut-off has at least one light emitting device 30 for visualization of a processes to be carried out on a workpiece mounted in a cutting machine 10. The cutting sequence consists of a number of cuts to be made on the workpiece mounted in the cutting machine 10.

The cutting machine 10 comprising a cutting unit 20 and a controller arranged in the supporting base of the cutting machine. A parting wheel will be mounted to the cutting unit 20 for carrying out parting cuts. The cutting unit includes a drive unit 22 for rotating said parting wheel. The workpiece will be mounted on a moving and rotatable table of said cutting machine.

Additionally, the cutting machine must include a protecting element 21 implemented as a number of shutters for preventing coolant liquid from being splashed or spraying beyond the workspace being defined by the shutter positioned between the pivot mechanism and the drive unit 22 of said cutting unit. Furthermore, a spray gun 19' can be connected to a liquid system system for allowing the operator to be able to spray of the coolant medium from the workpiece.

The light emitting device 30 is used for visualization of a cutting sequence prior to the steps of performing the actual cuts by said rotating parting wheel. The light emitting device can be configured as a laser beam emitter, which is configured to simulate each cut in said cutting sequence (processing sequence).

As shown in FIG 2A-B, the light emitting device 30 can be mounted on the cutting unit of the cutting machine, more preferably the light emitting device 30 is mounted on the protecting element 21 of the cutting unit.

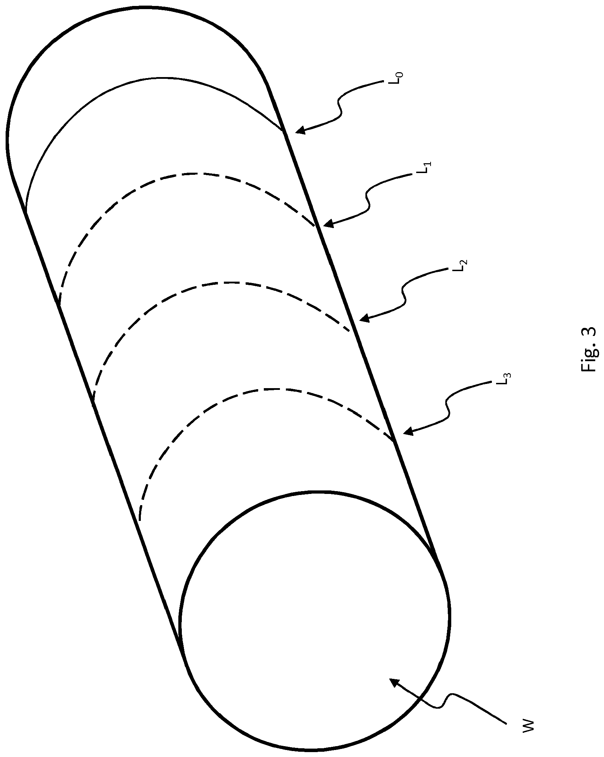

The light emitting device 30 could also be implemented for allowing the light emitting device 30 to move independently of the cutting disc (work tool) and the cutting unit (processing unit). Referring now to FIGS 3-4, the controller is configured for receiving a first and a second input data, wherein the first input data can be a complete demonstration cutting sequence and wherein the second input data is the actual cutting sequence. The second input data will be the cutting sequence consisting of the cuts, preferably cuts being inter-related with each other.

FIG. 3 shows sequentially planned cuts visualized on the surface of the workpiece according to first embodiment of the light emitting device

The first input data can be a cutting sequence consisting of four planned cuts (L₃, L₂, L₁, L₀), where the first cut L₀ is the indicated planned cut and the operator would therefore be able to inspect whether the planned cut is at the intended position on the workpiece The references L₂ and L₃ indicated with dotted illustrates the next planned cuts.

The first cutting sequence is not part of the simulation (demonstration function). Once the operator has approved of the indicated processing sequence, the processing step is started. It is with the scope to allow the simulation to be done step-by-step.

The simulation has an option to approve every step and can be stopped after each move. The operator is able to check whether the indicated processing step is acceptable or not This function can be overridden.

It is desirable to have the rotating cutting wheel mounted on the drive unit 22 of said cutting unit during the demo cutting sequence. The light emitting device can be a laser mounted on the protecting element covering the cutting wheel and the laser will flash to indicate where the cut is to be made.

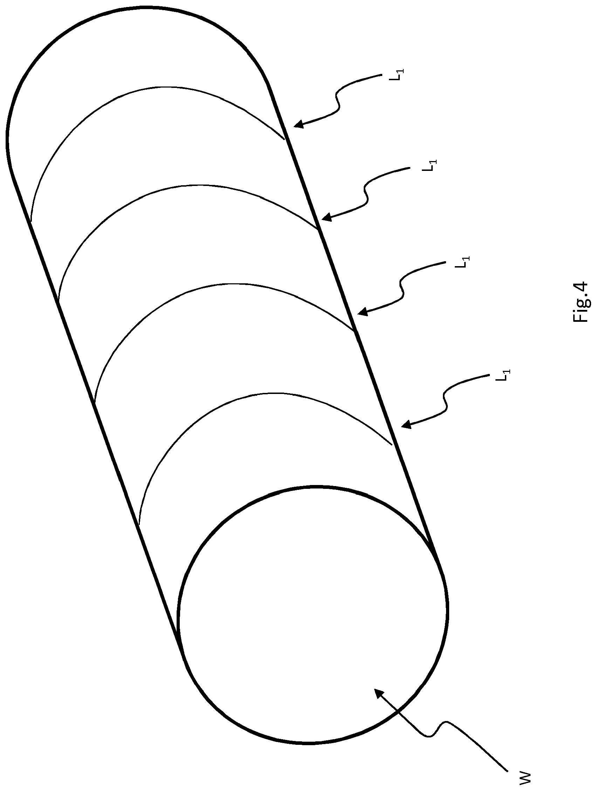

FIG. 4 shows all planned cuts visualized on the surface of the workpiece according to first embodiment of the light emitting device. In this embodiment one or more light emitting devices are used for visualizing all the cuts L₁ to be made to the workpiece. The light emitting device(s) are mounted independently of the cutting unit 20 so that the indication can display independently of the position of the cutting unit.

The machine is programmed for indicating a planned processing step to be carried out on a workpiece mounted in a cutting machine, the method would include the step of visualizing a plurality of processes to be applied to the workpiece in a sequence, prior to execution of said sequence.

The visualizing of the plurality processes to be applied to the workpiece is not limited to just one embodiment of the present invention, as the visualizing can be performed by indications provided on an image of the workpiece mounted in the cutting machine.

In this context it should be realized, that another aspect of the present invention can be implemented, by having a second display 52 for displaying the image of the workpiece. In this embodiment, the visualization of the cutting sequence would be implemented as a purely digital representation of the cutting sequence on a digital image of the workpiece.

### Reference numbers

In the following is given a list of reference numbers that are used in the detailed description of the invention.
cutting machine 10
supporting base 12
leg 13
moving table 14
upper surface of moving table 14'
flexible knee joint nozzles 15
front door 17 18
cooling system 19
spray gun 19'
cutting unit 20
protecting element 21
drive unit 22
cutting disc 23
pivot mechanism 24
shutter 25 26
light emitting device 30
clamping device 40
protruding element 42
clamping element 44
display 50
second display 52
joystick 60
workpiece w

## Claims

1. A method of indicating cuts to be carried out on a workpiece mounted in a cutting machine with a cutting disc, the method comprising a step of visualizing at the same time or sequentially a succession of individual planned cuts to be applied to the workpiece by said cutting disc, prior to execution of said cuts, said visualizing being indications provided i) on the workpiece as lines by emitted light or ii) on an image of the workpiece, wherein a display at the processing machine or a mobile device is used for displaying said image,
**characterized by** said cutting machine including a controller and
a memory configured for receiving user input in the form of said cuts to be applied.

2. A method of indicating cuts to be carried out according to claim 1, said workpiece being mounted on a movable table.

3. A method of indicating cuts to be carried out according to claim 1 or 2, said cutting disc being displaceable.

4. A cutting machine comprising a cutting disc, a processing unit, a movable table and a controller:
- the processing unit being provided for carrying out by said cutting disc one or more cuts on a workpiece;
- the table being configured for fixation of said workpiece;
- wherein a laser beam emitter is configured for visualizing planned cutting lines to be applied to said workpiece prior to the steps of performing said cuts **characterized by**
said controller being configured for visualizing by said laser beam emitter at the same time or sequentially a succession of individual planned cuts to be applied to the workpiece, prior to execution of said cuts.

5. A cutting machine comprising a cutting disc, a processing unit, a movable table, a controller and a display for displaying an image of a workpiece, said processing unit being provided for carrying out by said cutting disc one or more cuts on said workpiece, said controller being configured for visualizing planned cutting lines to be applied to said workpiece prior to the steps of performing said cuts, said visualizing being indications provided on said image.

6. A cutting machine according to any of the claims 4-5, said table being movable and/or said cutting disc being displaceable, said controller being configured for calculating said individual planned cuts, wherein the calculating includes movement of the table and/or displacement of the cutting disc.

## Patentansprüche

1. Verfahren zum Angeben von Schnitten, die an einem Werkstück vorgenommen werden sollen, das in einer Schneidemaschine mit einer Schneidscheibe montiert ist, das Verfahren umfassend einen Schritt des Visualisierens, zur selben Zeit oder sequentiell, einer Abfolge von individuell geplanten Schnitten, die durch die Schneidscheibe an dem Werkstück angebracht werden sollen, vor der
Ausführung der Schnitte, wobei das Visualisieren i) auf dem Werkstück als Linien durch emittiertes Licht oder ii) auf einem Bild des Werkstücks bereitgestellt werden, wobei eine Anzeige an der Verarbeitungsmaschine oder einer mobilen Vorrichtung zum Anzeigen des Bildes verwendet wird,
**gekennzeichnet durch** die Schneidemaschine einschließlich einer Steuerung und
eines Speichers, der zum Empfangen von Benutzereingaben in der Form der Schnitte konfiguriert ist, um
angebracht zu werden.

2. Verfahren zum Angeben von Schnitten, die nach Anspruch 1 vorgenommen werden sollen, wobei das Werkstück auf einem beweglichen Tisch montiert wird.

3. Verfahren zum Angeben von Schnitten, die nach Anspruch 1 oder 2 vorgenommen werden sollen, wobei die Schneidscheibe verschiebbar ist.

4. Schneidemaschine, umfassend eine Schneidscheibe, eine Verarbeitungseinheit, einen beweglichen Tisch und eine Steuerung:
- wobei die Verarbeitungseinheit zum Vornehmen durch die Schneidscheibe eines oder mehrerer Schnitte an einem Werkstück vorgesehen ist;
- wobei der Tisch für die Fixierung des Werkstücks konfiguriert ist;
- wobei ein Laserstrahlemitter konfiguriert ist, zum Visualisieren geplanter Schnittlinien, die an das Werkstück angebracht werden sollen, vor den Schritten des Durchführens des
Schnitts, **gekennzeichnet durch**
die Steuerung, die konfiguriert ist zum Visualisieren durch den Laserstrahlemitter,
zur selben Zeit oder sequentiell, einer Abfolge von individuell geplanten Schnitten, die an dem Werkstück angewendet werden sollen, vor Ausführung der Schnitte.

5. Schneidemaschine, umfassend eine Schneidscheibe, eine Verarbeitungseinheit, einen beweglichen Tisch, eine Steuerung und eine Anzeige zum Anzeigen eines Bilds eines Werkstücks, wobei die Verarbeitungseinheit zum Vornehmen durch die Schneidscheibe eines oder mehrerer Schnitte an dem Werkstück vorgesehen ist, wobei die Steuerung konfiguriert ist zum
Visualisieren geplanter Schnittlinien, die an das Werkstück angebracht werden sollen, vor den Schritten des Durchführens des Schnitts, wobei das Visualisieren Angaben sind, die auf dem Bild bereitgestellt sind.

6. Schneidemaschine nach einem der Ansprüche 4 bis 5, wobei der Tisch beweglich ist und/oder wobei die Schneidscheibe verschiebbar ist, wobei die Steuerung zum Berechnen der individuell geplanten Schnitte konfiguriert ist, wobei das Berechnen eine Bewegung des Tisches und/oder eine Verschiebung der Schneidscheibe einschließt.

## Revendications

1. Procédé d'indication des coupes à effectuer sur une pièce à usiner montée dans une machine à découper avec un disque de coupe, le procédé comprenant une étape de visualisation simultanée ou séquentielle d'une succession de coupes individuelles planifiées à appliquer à la pièce à usiner par ledit disque de coupe, avant l'exécution desdites coupes, ladite visualisation étant des indications fournies i) sur la pièce à usiner sous forme de lignes par la lumière émise ou ii) sur une image de la pièce à usiner, dans lequel un dispositif d'affichage au niveau de la machine de traitement ou d'un dispositif mobile est utilisé pour afficher cette image, **caractérisé en ce que** la machine à découper comprend un contrôleur et une mémoire configurés pour recevoir des données d'utilisateur dans la forme desdites coupes à appliquer.

2. Procédé d'indication des coupes à effectuer selon la revendication 1, ladite pièce à usiner étant montée sur une table mobile.

3. Procédé d'indication des coupes à effectuer selon la revendication 1 ou 2, ledit disque de coupe étant déplaçable.

4. Machine à découper comprenant un disque à découper, une unité de traitement, une table mobile et un contrôleur :
- l'unité de traitement étant prévue pour effectuer par ledit disque de coupe une ou plusieurs coupes sur une pièce à usiner ;
- la table étant configurée pour la fixation d'une pièce à usiner ;
- dans laquelle un émetteur de faisceau laser est configuré pour visualiser les lignes de coupe planifiées à appliquer à ladite pièce à usiner avant les étapes d'exécution desdites coupes, **caractérisée en ce que**
ledit contrôleur est configuré pour visualiser par ledit émetteur de faisceau laser, simultanément ou séquentiellement, une succession de coupes individuelles planifiées à appliquer à la pièce à usiner, avant l'exécution desdites coupes.

5. Machine à découper comprenant un disque de découpe, une unité de traitement, une table mobile, un contrôleur et un dispositif d'affichage pour afficher une image d'une pièce à usiner, ladite unité de traitement étant prévue pour effectuer par ledit disque de découpe une ou plusieurs coupes sur ladite pièce à usiner, ledit contrôleur étant configuré pour visualiser les lignes de découpe planifiées à appliquer à ladite pièce à usiner avant les étapes d'exécution desdites coupes, ladite visualisation étant constituée d'indications fournies sur ladite image.

6. Machine à découper selon l'une des revendications 4 à 5, ladite table étant mobile et / ou ledit disque de coupe étant déplaçable, ledit contrôleur étant configuré pour calculer lesdites coupes planifiées individuelles, dans laquelle le calcul comprend le mouvement de la table et / ou le déplacement du disque de coupe.
